# EUROPÄISCHE PATENTSCHRIFT

(11) **EP 1 381 902 B1**
(45) Veröffentlichungstag und Bekanntmachung des Hinweises auf die Patenterteilung: **05.08.2009**
(21) Anmeldenummer: 02732589.3
(22) Anmeldetag: 10.04.2002
(51) Int. Cl.: G02B 21/16

(54) **REFLEXIONSFILTERSYSTEM IN BELEUCHTUNGSEINRICHTUNG**
REFLECTING FILTER SYSTEM IN AN ILLUMINATING DEVICE
SYSTEM A FILTRES REFLECHISSANTS DANS UN DISPOSITIF D'ECLAIRAGE

(30) Priorität: 23.04.2001 DE 10119992
(43) Veröffentlichungstag der Anmeldung: 21.01.2004
(73) Patentinhaber: Vistec Semiconductor Systems GmbH, 35781 Weilburg (DE)
(72) Erfinder: VEITH, Michael, 35578 Wetzlar (DE); DANNER, Lambert, 35584 Wetzlar-Naunheim (DE)
(74) Vertreter: Reichert, Werner Franz
(86) Internationale Anmeldenummer: PCT/EP2002/003974
(87) Internationale Veröffentlichungsnummer: WO 2002/086580

(56) Entgegenhaltungen:
- EP-A- 1 069 449
- US-A- 5 867 329
- US-B1- 6 339 498
- PATENT ABSTRACTS OF JAPAN vol. 2000, no. 16, 8. Mai 2001 (2001-05-08) -& JP 2001 013319 A (OLYMPUS OPTICAL CO LTD), 19. Januar 2001 (2001-01-19)
- PATENT ABSTRACTS OF JAPAN vol. 1997, no. 03, 31. März 1997 (1997-03-31) -& JP 08 313728 A (NIKON CORP), 29. November 1996 (1996-11-29)
- PATENT ABSTRACTS OF JAPAN vol. 003, no. 125 (E-145), 19. Oktober 1979 (1979-10-19) -& JP 54 103060 A (FUJITSU LTD), 14. August 1979 (1979-08-14)

## Beschreibung

Die vorliegende Erfindung betrifft eine Beleuchtungseinrichtung, vorzugsweise für ein Mikroskop, insbesondere für ein UV-Mikroskop oder eines optischen Gerätes mit abbildender Optik, mit einer Lichtquelle und mit einem Reflexionsfiltersystem, das in einem Gehäuse angeordnet ist, wobei der Strahl des Lichts der Lichtquelle mehrere Reflexionen in dem Reflexionsfiltersystem durchläuft.

Beleuchtungseinrichtungen der gattungsbildenden Art sind beispielsweise aus der DE 199 31 954 A1 bekannt. Diese Beleuchtungseinrichtung dient als Lichtquelle und Wellenlängenselektionsvorrichtung für ein DUV-(= Deep Ultra Violett) Mikroskop bekannt. Beleuchtungseinrichtungen für DUV-Mikroskope müssen Beleuchtungslicht eines schmalen Beleuchtungswellenlängenbereichs zur Verfügung stellen, für welches die Mikroskopoptik korrigiert ist. Der Beleuchtungswellenlängenbereich wird durch die spektrale Lage des Intensitätsmaximums sowie dessen Halbwertsbreite charakterisiert. Zur Selektion des gewünschten Beleuchtungswellenlängenbereichs aus einem Spektrum einer geeigneten Lichtquelle - beispielsweise einer Quecksilberdampflampe - sind sowohl Transmissions-Schmalbandfiltersysteme als auch Reflexionsfiltersysteme bekannt. Diese Filtersysteme sind im Beleuchtungsstrahlengang angeordnet und führen Licht des selektierten Beleuchtungswellenlängenbereichs dem Mikroskop als Nutzlicht zu.

Transmissions-Schmalbandfiltersysteme im DUV liefern Peaks mit einer sehr schmalen Halbwertsbreite, dafür liegt die maximale Transmission und damit der Spitzenwert der Peaks bei nur etwa 20% der Eingangslichtleistung, die vor dem Transmissions-Schmalbandfiltersystem vorlag. Somit stellen Transmissions-Schmalbandfiltersysteme keine effizienten Wellenlängenselektionsvorrichtungen für DUV-Licht da.

Die bekannten Reflexionsfiltersysteme bestehen aus mehreren Reflexionsfiltem, an denen das Licht der Lichtquelle jeweils unter einem bestimmten Einfallswinkel auftrifft und reflektiert wird. Bei diesen Reflexionsfiltersystemen liegt der reflektierte und somit nutzbare Anteil des Lichts des selektierten Beleuchtungswellenlängenbereichs deutlich über 90% über der Eingangslichtleistung.

Das Dokument JP 2001-013319 A offenbart einen optischen Filter und ein Beleuchtungssystem, das diesen Filter enthält. Der optische Filter besitzt eine bestimmte spektrale Durchlässigkeit, die eine Asymmetrie besitzt. Das System besitzt zwar eine optische Einrichtung, die einen Strahlversatz herstellt, hat aber kein Reflexionsfiltersystem, im dem das Licht von der Lichtquelle mindestens eine vierfache Reflexion erfährt.

Die Japanische Patentanmeldung 08-313728 A offenbart eine Bandpass-Filter. Es sind vier Reflexionsfilter und ein Transmissionsfilter vorgesehen. Durch die Kombination dieser Filter, wird die Transmission von Licht in dem Wellenlängenbereich erlaubt, der durch die Reflexionsfilter reflektiert wird. Die Anordnung des in der japanischen Patentanmeldung 08-313728 A offenbarten Reflexionsfiltersystems ist kein Filtersystem, das Reflexions-Notch-Finer umfasst.

Bei dem aus der DE 199 31 954 A1 bekannten Reflexionsfiltersystem ist eine Anordnung der Reflexionsfilter vorgesehenen, bei der Reflexionswinkel an den einzelnen Reflexioinsfiltem vorliegen, die kleiner als 30° sind. Hierdurch kann eine Halbwertsbreite des selektierten .Beleuchtungswellenlängenbereichs von kleiner 20 nm erzeugt werden. Je nach Art der verwendeten Reflexionsfilter kann durch ein solches Reflexionsfiltersystem mit kleinen Einfallswinkeln die aus dem Reflexionsfiltersystem austretende Lichtleistung ungefähr 98% der Eingangslichtleistung betragen.

Fig.1 aus DE 199 31 954 A1 zeigt eine solche Beleuchtungseinrichtung in Verbindung mit einem DUV-Mikroskop. Hierbei ist das Reflexionsfiltersystem zwischen Lichtquelle und DUV-Mikroskop, angeordnet, was für sich gesehen einen enormen. Platzbedarf beansprucht. Falls das DUV-Mikroskop als Halbleiterinspektionsmikroskop zum Einsatz kommt, muss dieses im Reinraum aufgestellt und bedient werden. Da der Aufwand zum Betreiben eine Reinraums mit zunehmendem Volumen ganz erheblich zunimmt, müssen die dort aufgestellten Geräte möglichst platzsparend angeordnet sein, im Idealfall nur eine geringe Stellfläche beanspruchen

Oftmals besteht die Notwendigkeit, in einem optischen System und insbesondere in einem Mikroskopsystem mehrere Beleuchtungslichtquellen einzusetzen, die jeweils einen Beleuchtungswellenlängenbereich aufweisen, der sich vom Infraroten- über den Visuellen- bis hin zum DUV-Wellenlängenbereich erstreckt. Üblicherweise werden hierzu bis zu drei verschiedene Lichtquellen samt Lampengehäuse optomechanisch integriert, was nur mit einer Reihe von Umlenkspiegeln und/oder Strahlvereinigungen in der Beleuchtungsoptik realisierbar ist und in nachteiliger Weise mit einer Vergrößerung bzw. einer Vermehrung der optischen Strahlengänge einhergeht.

Der vorliegenden Erfindung liegt daher die Aufgabe zugrunde, eine Beleuchtungseinrichtung der gattungsbildenden Art derart anzugeben und weiterzubilden, dass die räumlichen Ausmaße der Beleuchtungseinrichtung minimiert werden können.

Die Beleuchtungseinrichtung der gattungsbildenden Art löst die voranstehende Aufgabe durch die Merkmale des Patentanspruchs 1. Danach ist im Gehäuse ein erstes Reflexionsfiltersystem vorgesehen, das vier Reflexions-Notch-Filter umfasst, die derart ausgestaltet sind, dass sie Licht mit einer Wellenlänge von 365nm reflektieren. Ebenso ist im Gehäuse ein zweites Reflexionsfiltersystem vorgesehen ist, das vier Reflexions-Notch-Filter umfasst, die derart ausgestaltet sind, dass sie Licht mit einer Wellenlänge von 248nm reflektieren. Eine Platte ist im Gehäuse vorgesehen, die derart ausgestaltet ist, dass selektiv das erste Reflexionsfiltersystem oder das zweite Reflexionsfiltersystem in dem Strahl des Lichts der Lichtquelle positionierbar ist. Das erste Reflexionsfiltersystem und das zweite Reflexionsfiltersystem ist derart ausgestaltet, dass das Licht der Lichtquelle im jeweiligen Reflexionsfiltersystem mindestens vier Reflexionen erfährt. Ein Eintrittsstrahl in das entsprechende Reflexionsfiltersystem weist zu einem entsprechenden Austrittsstrahl einen parallelen optischen Strahlversatz auf.

Erfindungsgemäß ist zunächst erkannt worden, dass durch die Realisierung eines optischen Strahlversatzes die räumlichen Ausmasse der Beleuchtungseinrichtung reduziert werden können. Somit ist im Gegensatz zum Ausführungsbeispiel aus Fig. 1 der DE 199 31 954 A1 keine lineare Anordnung von Lichtquelle und Reflexionstiltersystem notwendig, vielmehr kann die Lichtquelle oberhalb, unterhalb oder seitlich versetzt zur optischen Achse des Mikroskops angeordnet sein. Insbesondere Halbleiterinspektionsmikroskope weisen üblicherweise einen sehr großen Objekttisch auf. Dieser Objekttisch muss in der Lage sein, die mittlerweile sehr großen Halbleiterprodukte - Wafer - relativ zum Objektiv des Mikroskops derart zu positionieren, dass sämtliche Bereiche des Halbleiterprodukts lichtoptisch inspiziert werden können. Demzufolge ist eine Anordnung einer Lichtquelle bei optimiertem optischen Strahlengang nur oberhalb oder unterhalb des Mikroskoptischs möglich. Wie bereits erwähnt, steht auf der dem Mikroskopbediener abgewandten Seite des Mikroskops ebenfalls nicht beliebig viel Platz zur Verfügung.

So sind die Vorgaben an ein Gesamtsystem hinsichtlich einer Minimierung seiner räumlichen Ausmasse aufgrund der Implementierung im Reinraum vom Käufer weitgehend vorgegeben. Insoweit wird mit einer erfindungsgemäßen Beleuchtungseinrichtung mit einem optischen Strahlversatz zwischen Eintrittsstrahl und Austrittsstrahl eine Anordnung der Beleuchtungseinrichtung an dem Mikroskop ermöglicht, die diesen Vorgaben gerecht wird.

Eine Reduzierung der Ausmasse der Beleuchtungseinrichtung kann in vorteilhafter Weise ebenfalls durch eine Richtungsänderung zwischen Eintrittsstrahl und Austrittsstrahl des Reflexionsfiltersystems erzielt werden. Hierdurch kann beispielsweise eine Lichtquelle seitlich neben dem oberen Teil des Mikroskopstativs angeordnet werden, wobei die Lichtquelle Licht in eine Richtung emittiert, die vom Bediener des Mikroskops aus gesehen nach hinten verläuft. Nach Durchlaufen des Reflexionsfiltersystems könnte - bei einer Realisierung einer Richtungsänderung zwischen Eintrittsstrahl und Austrittsstrahl - das hinsichtlich des Beleuchtungswellenlängenbereichs selektierte Beleuchtungslicht seitlich in das Mikroskop eingekoppelt werden. Von ganz besonderem Vorteil kann die Kombination eines optischen Strahlversatzes und einer Richtungsänderung zwischen Eintrittsstrahl und Austrittsstrahl des Reflexionsfiltersystems sein, so dass beispielsweise eine Lichtquelle auch oberhalb des Mikroskopstativs angeordnet sein kann, z.B. vom Benutzer aus gesehen im hinteren Bereich des Mikroskops.

In einer konkreten Ausführungsform ist vorgesehen, dass der Reflexionswinkel bei jeder Reflexion in dem Reflexionsfiltersystem zumindest nahezu gleich ist. Hierdurch können identische Reflexionsfilter zum Einsatz kommen, was in vorteilhafter Weise die Herstellung vereinfacht und die Produktionskosten reduziert.

In einer besonders vorteilhaften Ausführungsform ist ein weiteres Reflexionsfiltersystem vorgesehen, dass zum ersten Reflexionsfiltersystem umschaltbar angeordnet ist. Hierdurch kann mit Hilfe des weiteren Reflexionsfiltersystems eine andere Wellenlänge bzw. ein anderer Wellenlängenbereich der Lichtquelle selektiert werden, so dass die Anzahl der notwendigen Lichtquellen in besonders vorteilhafter Weise reduziert werden kann. Im Konkreten könnten die Reflexionsfiltersysteme derart angeordnet sein, dass mit Hilfe von Umlenkeinrichtungen bzw. umschaltbaren Spiegeln das Licht der Lichtquelle entweder durch das eine oder das andere Reflexionsfiltersystem geleitet werden kann. Auch ist die Verwendung einer oder mehrerer 50:50-Strahlteiler, dichroitischen Strahlteiler oder dergleichen, vorgesehen, die simultan Licht der Lichtquelle auf mindestens zwei Reflexionsfiltersysteme leitet. Somit wäre durch die Beleuchtungseinrichtung eine simultane Beleuchtung mit mehreren unterschiedlichen Wellenlängen bzw. Wellenlängenbereichen gewährleistet.

In einer konkreten Ausführungsform sind die Reflexionsfiltersysteme derart angeordnet, dass entweder das eine oder das andere Reflexionsfiltersystem in den optischen Strahlengang eingebracht wird. Dies könnte beispielsweise mit Hilfe von Filterschieberblöcken in einer entsprechenden mechanischen Führung realisiert werden. Diese Umschaltung könnte mechanisch und/oder motorisch erfolgen, wobei eine Beleuchtungseinrichtung für ein Halbleiterinspektionsmikroskop eine motorische Umschaltung aufweisen sollte.

In besonders vorteilhafter Weise sind die umschaltbar angeordneten Reflexionsfiltersysteme derart konfiguriert, dass bei jeweils aktiver Stellung im optischen Strahlengang die Bilder der Lichtquelle jeweils die gleiche Lage und Größe im optischen Strahlengang aufweisen. Hierdurch läßt sich das Design des Gesamtsystems in weiterer vorteilhafter Weise vereinfachen.

Falls die Beleuchtungseinrichtung für ein VIS oder IR-Mikroskop oder für ein UV- bzw. ein DUV-Mikroskop eingesetzt werden soll, ist die Lichtquelle in einem Gehäuse angeordnet. Dieses Gehäuse bzw. Lampengehäuse weist hierbei diverse optische Komponenten auf, beispielsweise Justiermittel, einen Reflektor und einen Kollektor. Insoweit weist das das Lampengehäuse verlassende Licht der Lichtquelle üblicherweise einen nahezu kollimierten Strahlverlauf auf. Auch das Reflexionsfiltersystem bzw. die Reflexionsfiltersysteme könnten ebenfalls in einem Gehäuse angeordnet sein. Hierdurch wird insbesondere beim Einsatz der Beleuchtungseinrichtung auf dem Gebiet der Mikroskopie eine dort übliche, modulare Bauweise der einzelnen Komponenten realisiert. Zur Adaption der einzelnen Komponenten am Mikroskop weisen das Lampengehäuse und das Gehäuse des Reflexionsfiltersystems bzw. der Reflexionsfiltersysteme eine mechanische Schnittstelle auf, die vorzugsweise standardisiert ist. Somit können die Gehäuse der Beleuchtungseinrichtung an unterschiedlichen Mikroskopen oder sonstigen Vorrichtungen - beispielsweise Dia-Projektionsapparate - in einfacher Weise adaptiert werden.

In einer bevorzugten Ausführungsform verläuft das Licht im Reflexionsfiltersystem und/oder beim Austritt aus dem Reflexiönsfiltersystem zumindest weitgehend kollimiert. Auch durch diese Maßnahme ist eine einfache Adaption an den Strahlengang eines Mikroskops oder eines Dia-Projektionsapparats möglich. Hierdurch wird ebenfalls sichergestellt, dass der kollimiert verlaufende Lichtstrahl vor und nach einer Reflexion im Reflexionsfiltersystem ungefähr den gleichen Strahlquerschnitt aufweist, so dass im Fall mehrerer Reflexionen im Reflexionsfiltersystem die optischen Komponenten in ihren räumlichen Ausmaßen auf den gleichen Strahldurchmesser bzw. Strahlquerschnitt ausgerichtet sein müssen.

In einer besonders bevorzugten Ausführungsform weist das Reflexionsfiltersystem Reflexionsfilter auf, die vorzugsweise als ausgestaltet sind. Hierbei sind für ein Reflexionsfiltersystem baugleiche Reflexionsfilter vorgesehen, die beispielsweise aus Schwarzglas bestehen und auf denen Schichten aufgedampft sind, wobei ein solcher Reflexionsfilter bei der zu selektierenden Wellenlänge einen Reflexionskoeffizient von nahezu 1 aufweist. Für die Halbleiterinspektionsmikroskopie ist insbesondere Licht der "i-Linie" d.h. UV-Licht der Wellenlänge von 365 nm, sowie "DUV"-Licht. d.h. Licht der Wellenlänge von 248 nm, von Bedeutung. Der Reflexionskoeffizient eines solchen Reflexionsfilters bei allen anderen Wellenlängen ist sehr gering, so dass bei jeder Reflexion an einem Reflexionsfilter das Licht der nicht zu selektierenden Wellenlänge unterdrückt wird. Daher sind in einer konkreten Ausführungsform mindestens vier Reflexionsfilter pro Reflexionsfiltersystem vorgesehen. Nach vier Reflexionen ist das Licht aus Wellenlängenbereichen, die nicht vom Reflexionsfiltersystem selektiert werden, weitgehend unterdrückt, so dass mit der erfindungsgemäßen Beleuchtungseinrichtung in Verbindung mit einem UV- bzw. einem DUV-Mikroskop eine Mikroskop-Abbildung erzielt werden kann, die nahezu frei von Farbfehlem ist.

In einer alternativen Ausführungsform weist das Reflexionsfiltersystem einen transparenten Baustein auf. Dieser transparente Baustein weist zur internen Reflexion des Lichts mindestens zwei Grenzflächen auf, die mit einer Reflexionsbeschichtung versehen sind. Diese Reflexionsbeschichtungen könnten eine Charakteristik aufweisen, die vergleichbar zu der der Reflexions-Notch-Filter ist. Im Hinblick auf eine Mehrfachreflexion im transparenten Baustein sind die Grenzflächen mit Reflexionsbeschichtung gegenüberliegend angeordnet.

Bei einer bevorzugten Ausführungsform ist die Form des transparenten Bausteins derart ausgebildet, dass die Grenzflächen zumindest nahezu parallel oder geringfügig keilförmig zueinander angeordnet sind. Hierdurch ist im Fall der Mehnfachreflexion ein kollimierter Strahlverlauf im transparenten Baustein dann möglich, wenn das in den Baustein eintretende Licht ebenfalls kollimiert verläuft und die Grenzflächen parallel zueinander angeordnet sind. Falls die Grenzflächen geringfügig keilförmig zueinander angeordnet sind, kann durch Mehrfachreflexion im transparenten Baustein der Strahldurchmesser des aus dem Reflexionsfiltersystem austretenden Strahls gegenüber, dem Strahldurchmesser des in das Reflexionsfiltersystem eintretenden Lichtstrahls verkleinert oder vergrößert werden, so dass hierdurch in vorteilhafter Weise eine Strahlformanpassung ohne weitere optischen Bauteile möglich ist. Hierbei ist der Keilwinkel der Grenzflächen derart zu wählen, dass auch bei Mehrfachreflexionen im transparenten Baustein die Reflexionsbeschichtung der jeweiligen Grenzflächen immer noch Licht der zu selektierenden Wellenlänge bzw. des selektierenden Wellenlängenbereichs mit einer hinreichenden Effizienz reflektiert.

Der transparente Baustein könnte im Wesentlichen aus Glas, Quarzglas, CaF2 oder aus Plexiglas hergestellt sein. Falls die Beleuchtungseinrichtung Licht aus dem UV-Wellenlängenbereich zur Verfügung stellen soll, ist der transparente Baustein im Wesentlichen aus Quarzglas hergestellt.

Der transparente Baustein weist Eintrittsflächen und Austrittsflächen für das Licht der Lichtquelle auf, die vorzugsweise mit einer Anti-Reflex-Beschichtung versehen sind. Hierdurch kann in vorteilhafter Weise der Anteil des an der Eintrittsfläche bzw. Austrittsfläche reflektierten Lichts weitgehend verringert werden, so dass durch die Anti-Reflex-Beschichtung die Lichtausbeute der Beleuchtungseinrichtung weiter optimiert werden kann.

Zur Anpassung der Lage des Bilds der Lichtquelle an den Strahlengang eines Mikroskops oder eines optischen Gerätes mit abbildender Optik sind im Strahlengang des Reflexionsfiltersystems oder in dessen Gehäuse Strahlformungsmittel vorgesehen. Hierbei kann es sich beispielsweise um Linsen oder um gekrümmte Reflexionsflächen handeln. Letztendlich kann somit bereits vor dem Austritt des vom Reflexionsfilter[s]system selektierten Beleuchtungslichts aus der Beleuchtungseinrichtung eine Anpassung an die Erfordernisse des optischen Strahlengangs des nachfolgenden Geräts erfolgten,

In weiter vorteilhafter Weise sind in der Beleuchtungseinrichtung und insbesondere im Reflexionsfiltersystem passive und/oder aktive Mittel zur Kühlung vorgesehen. Das vom Reflexionsfiltersystem nicht reflektierte Licht wird üblicherweise mit Hilfe von Lichtfallen absorbiert, wobei das absorbierte Licht in Wärme umgesetzt wird. Damit die in der Strahlfalle erzeugte Wärme nicht zu einer unerwünschten Ausdehnung der übrigen optischen Komponenten bzw. zu thermischen Schäden führt, was letztendlich zu einem instabilen optischen Strahlengang bzw. zu einer instabilen Beleuchtungssituation führen könnte, führen die vorgesehenen Mittel die Wärme aktiv oder passiv an die Umgebung ab. Bei den passiven Mitteln zur Kühlung könnte es sich beispielsweise um Kühlrippen handeln, die aus dem Gehäuse des Reflexionsfiltersystems herausragen. Die aktiven Mittel zur Kühlung könnten beispielsweise eine Peltier-Kühlung umfassen.

Da eine Mehrfachreflexion im Reflexionsfiltersystem das Licht des nicht zu selektierenden Wellenlängenbereichs mit steigender Anzahl der Reflexionen effektiver unterdrückt, sind zur Selektion eines möglichst schmalbandigen Beleuchtungswellenlängenbereichs mindestens zwei Reflexionen im Reflexionsfiltersystem vorgesehen.

In einer ganz besonders bevorzugten Ausführungsform ist ein Gesamtsystem vorgesehen, das ein Mikroskop und die erfindungsgemäße Beleuchtungseinrichtung aufweist. Dieses Mikroskop könnte ein UV-Mikroskop, ein DUV-Mikroskop, ein Raster-Mikroskop, ein konfokales, ein doppelkonfokales Raster-Mikroskop, ein Fluoreszenzmikroskop sein, insbesondere könnte es sich bei dem Gesamtsystem um ein Halbleiterinspektions- und/oder Halbleitermessmikroskop handeln.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung einer aus dem Stand der Technik bekannten Beleuchtungseinrichtung, die an ein DUV-Mikroskop adaptiert ist;
- Fig.2: in einer dreidimensionalen Ansicht ein erstes Ausführungsbeispiel einer erfindungsgemäßen Beleuchtungseinrichtung, die an ein DUV-Mikroskop adaptiert ist;
- Fig. 3: in einer schematischen Darstellung den optischen Strahlengang eines Reflexionsfiltersystems;
- Fig. 4: in einer schematischen Darstellung den optischen Strahlengang eines weiteren Reflexionsfiltersystems;
- Fig. 5: in einer dreidimensionalen Detailansicht eine konkrete Ausführungsform eines Gehäuses, das zwei Reflexionsfiltersysteme aufnimmt;
- Fig.6: das aus Fig. 5 gezeigte Gehäuse in einem anderen Schaltzustand und
- Fig.7: in einer schematischen Darstellung ein weiters Ausführungsbeispiel eines erfindungsgemäßen Reflexionsfilter systems;

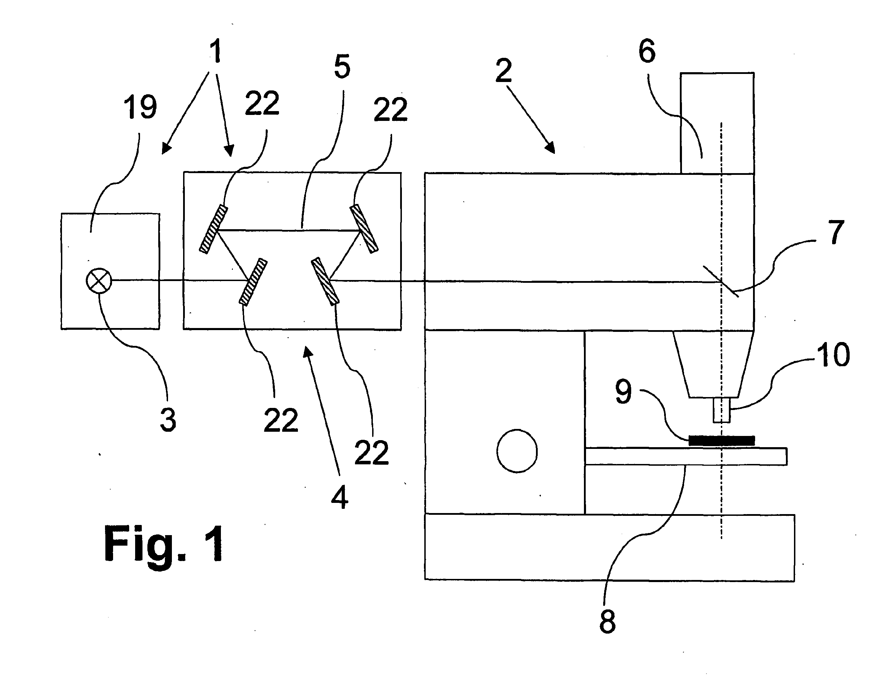

Fig. 1 zeigt in einer schematischen Darstellung eine Beleuchtungseinrichtung 1 in Verbindung mit einem DUV-Mikroskop 2, wie es aus dem Stand der Technik bekannt ist. Die Beleuchtungseinrichtung 1 weist eine Lichtquelle 3 und ein Reflexionsfiltersystem 4 auf. Der Strahl 5 des Lichts der Lichtquelle 3 durchläuft im Reflexionsfiltersystem 4 mehrere Reflexionen. Der Reflexionswinkel bei jeder Reflexion im Reflexionsfiltersystem ist hierbei gleich. Das DUV- . Mikroskop 2 weist einen Detektor 6 auf, der als TV-Kamera ausgeführt ist. Der Beleuchtungslichtstrahl wird vom Detektionslichtstrahl durch den Strahlteiler 7 getrennt. Das auf dem Mikroskoptisch 8 angeordnete Objekt 9 wird vom Objektiv 10 auf den Detektor 6 abgebildet.

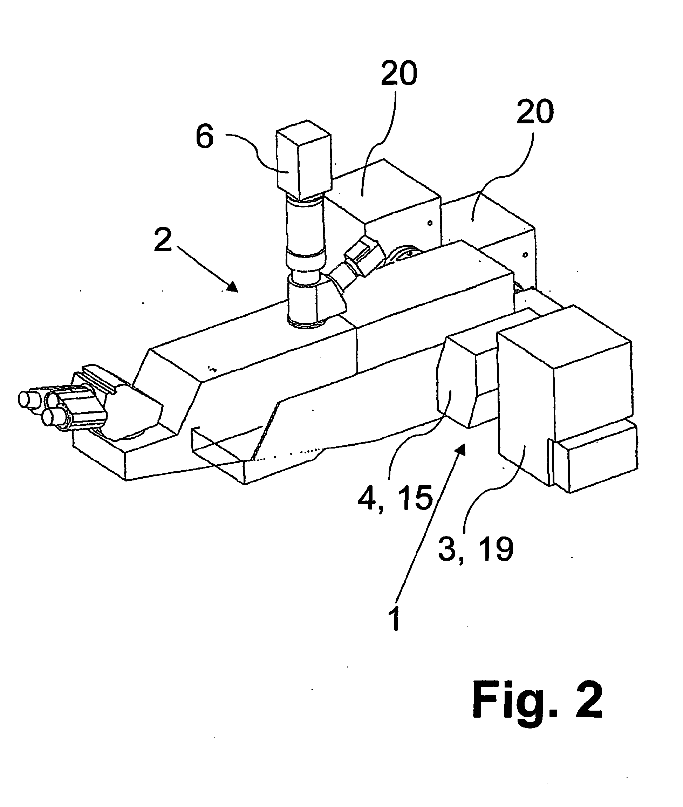

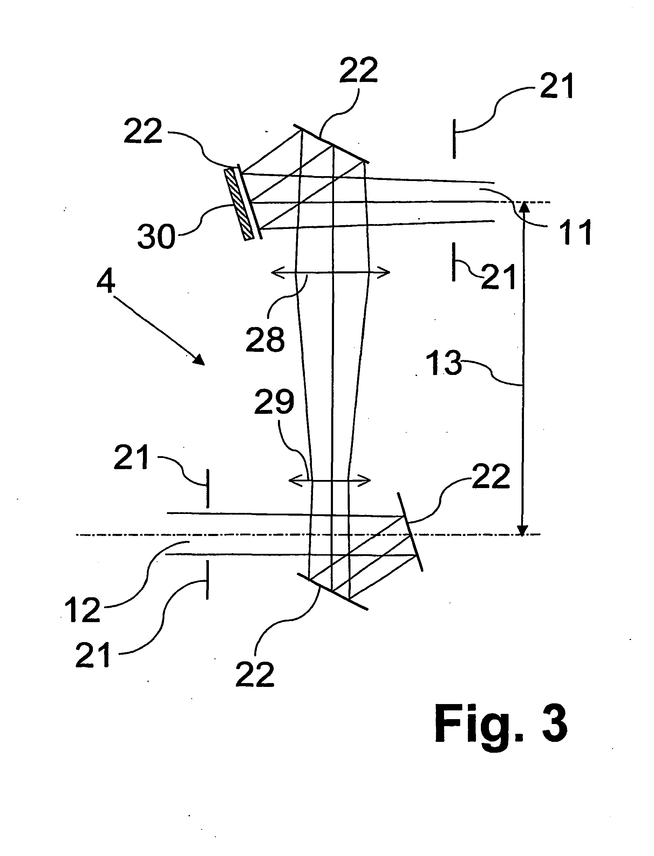

Fig. 2 zeigt ein Ausführungsbeispiel einer erfindungsgemäßen Beleuchtungseinrichtung 1, die an ein als DUV-Mikroskop 2 ausgeführtes Halbleiterinspektionsmikroskop adaptiert ist. Diese Beleuchtungseinrichtung 1 weist eine Lichtquelle und ein Reflexionsfiltersystem auf, wobei der Strahlengang des Reflexionsfiltersystems in Fig. 3 näher gezeigt ist.

Erfindungsgemäß ist das Reflexionsfiltersystem 4 der Beleuchtungseinrichtung 1 derart ausgeführt, dass der Eintrittsstrahl 11 zum Austrittsstrahl 12 einen optischen Strahlversatz 13 aufweist. Hierbei ist der Eintrittsstrahl 11 des Reflexionsfiltersystems 4 der in Fig. 3 nicht gezeigten Lichtquelle 3 zugeordnet. Nach Durchlaufen des Reflexionsfiltersystems 4 tritt das selektierte Beleuchtungslicht in Form des Austrittsstrahls 12 aus dem Reflexionsfiltersystem 4 aus und in das - ebenfalls in Fig. 3 nicht gezeigte - DUV-Mikroskop 2 ein.

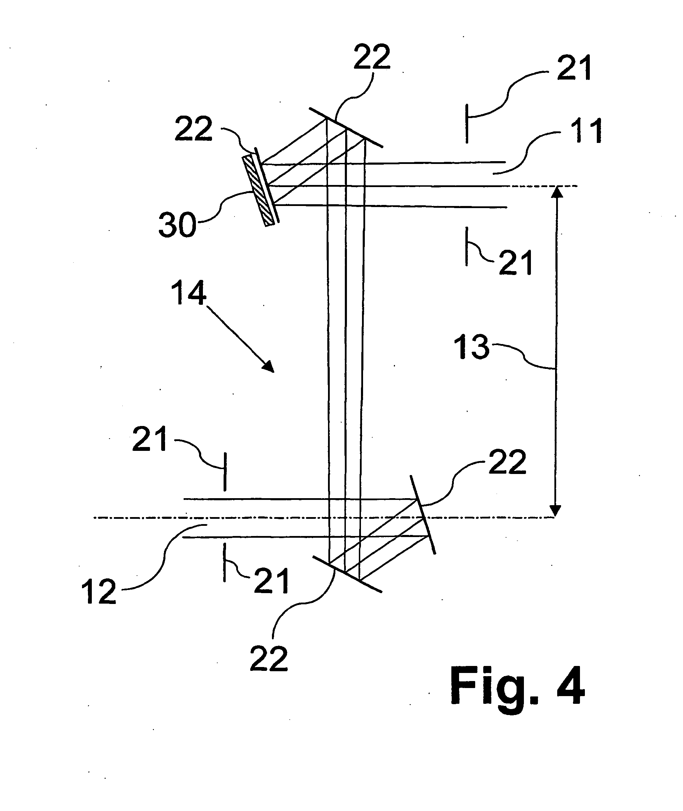

Mit dem Reflexionsfiltersystem 4 aus Fig. 3 kann Licht des Wellenlängenbereichs von 365 nm ± 8 nm (i-Linie) selektiert werden. Mit dem in Fig. 4 gezeigten Reflexionsfiltersystem 14 wird DUV-Licht des Wellenlängenbereichs 248 nm ± 7 nm selektiert.

Sowohl das Reflexionsfiltersystem 4 aus Fig. 3 als auch das Refelxionsfiltersystem 14 aus Fig. 4 sind beide in dem in Fig. 2 gezeigten DUV-Mikrokop 2 implementiert. Die beiden Reflexionsfiltersysteme sind hierbei motorisch in dem Gehäuse 15 umschaltbar angeordnet. Hierbei wird entweder das zur Selektion der i-Linie vorgesehene Reflexionsfiltersystem 4 oder das zur Selektion der 248 nm-Linie vorgesehene Reflexionsfiltersystem 14 als Ganzes alternativ in den optischen Strahlengang eingebracht.

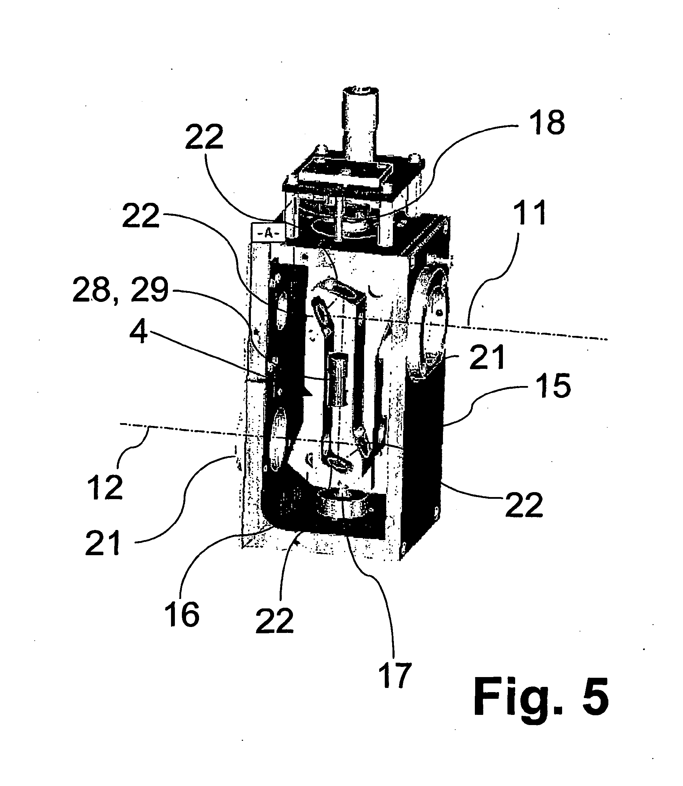

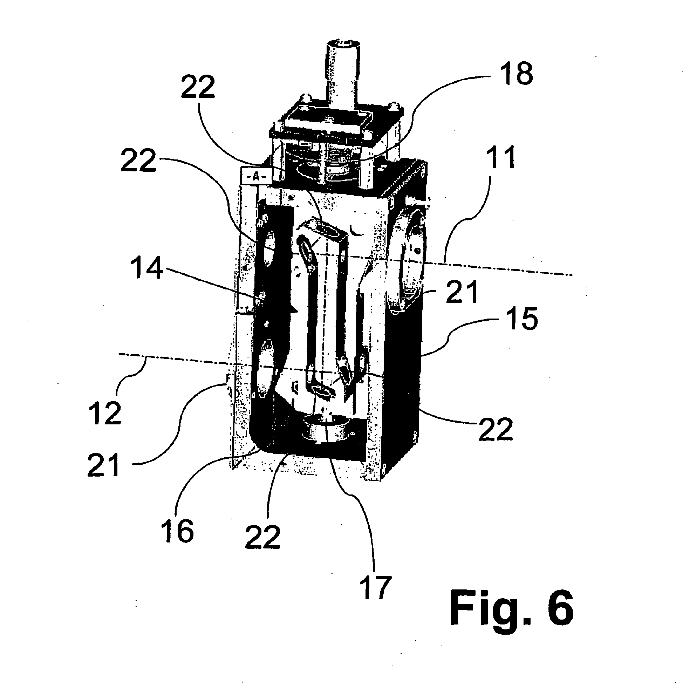

Die Fig. 5 und 6 zeigen in einer dreidimensionalen Detailansicht das Innere des in Fig. 2 gezeigten Gehäuses 15. Hierbei ist in Fig. 5 das Reflexionsfiltersystem 4 aus Fig. 3 in den Beleuchtungsstrahlengang eingebracht. Die in Fig. 6 gezeigte Darstellung zeigt das Gehäuse 15 aus Fig. 5 in einer Betriebsstellung, in der das Reflexionsfiltersystem 14 aus Fig. 4 im Beleuchtungsstrahlengang eingebracht ist. Beide Reflexionsfiltersysteme 4, 14 aus Fig. 5 und 6 sind auf einer Platte 16 adaptiert: Die Platte 16 ist um eine Drehachse 17 drehbar gelagert und kann vom Motor 18 gedreht werden. Hierbei sind zwei Drehstellungen der Platte 16 vorgesehen, nämlich eine Stellung bei 0°, die in Fig. 5 gezeigt ist, und die andere Stellung bei 180°, die in Fig. 6 gezeigt ist. Durch diese platzsparende, kompakte und stabile Bauweise kann mit nur einer Lichtquelle 3 entweder Licht der Wellenlänge 248 nm oder Licht der Wellenlänge 365 nm selektiert bzw. dem Mikroskop als Beleuchtungslicht zur Verfügung gestellt werden. Hierbei ist besonders hervorzuheben, dass durch die in sich gefaltete Strahlführung im Reflexionsfiltersystem 4, 14 die platzsparende Bauweise weiter begünstigt ist.

Fig. 2 ist entnehmbar, dass Lichtquelle 3 im Gehäuse 19 angeordnet ist, weitere Lichtquellen - für den visuellen Hellfeld und den Weißlicht-Konfokal-Modus - sind in den beiden anderen Gehäusen 20 angeordnet.

In den Fig. 3 und 4 ist die mechanische Schnittstelle 21 des Reflexionsfiltersystemgehäuses angedeutet, die ebenfalls in den Fig. 5 und 6 gezeigt sind. Sowohl die mechanische Schnittstelle für die Adaption an das Mikroskop 2 als auch für die Adaption an das Lampengehäuse 19 ist standardisiert, entspricht den in der Mikroskopie üblichen Abmessungen und Wirkungsweisen.

Den Fig. 3 und 4 ist entnehmbar, dass sowohl das Licht im Reflexionsfiltersystem 4, 14 als auch das Licht beim Ein- und Austritt in bzw. aus dem Reflexionsfiltersystem 4, 14 zumindest weitgehend kollimiert verläuft. Die Refelxionsfiltersysteme 4, 14 weisen jeweils vier Reflexionsfilter 22 auf, die als Reflexions-Notch-Filter ausgestaltet sind. Demgemäß reflektieren die Reflexionsfilter 22 aus Fig. 3 Licht der Wellenlänge 365 nm, die in Fig. 4 gezeigten Reflexionsfilter 22 reflektieren Licht der Wellenlänge 248 nm.

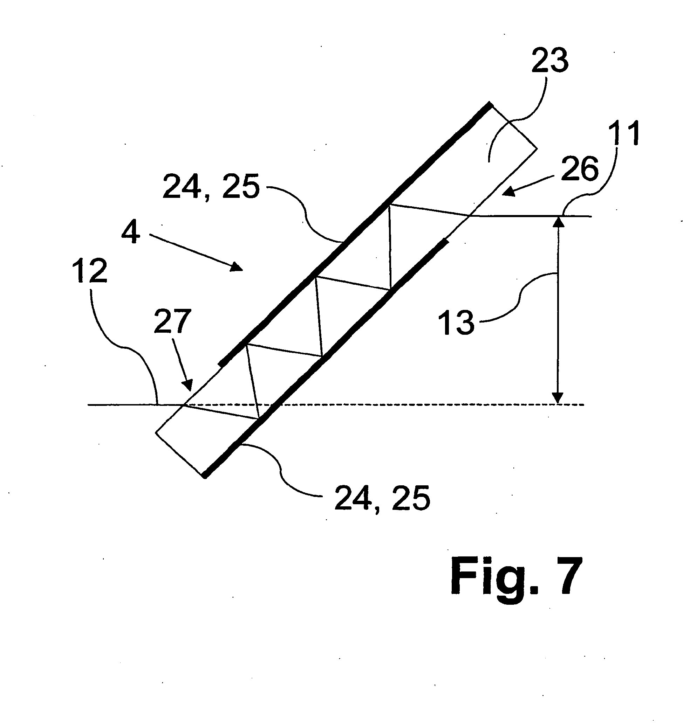

Fig. 7 zeigt ein weiters Ausführungsbeispiel eines Refelxionsfiltersystems 4, bei dem ein transparenter Baustein 23 zum Einsatz kommt. Auch bei diesem Reflexionfiltersystem 4 ist zwischen dem Eintrittsstrahl 11 und dem Austrittsstrahl 12 ein optischer Strahlversatz 13 realisiert. Der transparente Baustein 23 weist zwei Grenzflächen 24 auf, die mit einer Reflexionsbeschichtung 25 versehen sind. Die Form des transparenten Bausteins 23 ist derart gewählt, dass die beiden Grenzflächen 24 parallel zueinander angeordnet sind. Der transparente Baustein 23 ist aus Quarzglas hergestellt. Licht der in Fig. 7 nicht gezeigten Lichtquelle 3 tritt an der Eintrittsfläche 26 des transparenten Bausteins 23 in diesen ein. Nach insgesamt sechs Reflexionen in dem transparenten Baustein 23 tritt das nunmehr hinsichtlich des Beleuchtungswellenlängenbereichs selektierten Lichts bei der Austrittsfläche 27 aus dem transparenten Baustein 23 aus. Die Eintrittsfläche 26 sowie die Austrittsfläche 27 sind mit einer Anti-Reflex-Beschichtung versehen, und zwar dahingehend, dass möglichst wenig des zu selektierenden Lichts an der Eintrittsfläche 26 reflektiert wird, d.h. nicht in den transparenten Baustein 23 eintritt. Auch die Anti-Reflex-Beschichtung der Austrittsfläche 27 ist derart ausgeführt, dass möglichst wenig Nutzlicht intern, d.h. im transparenten Baustein 23, reflektiert wird. Hierdurch wird der Verlust des Nutzlichts aufgrund von unbeabsichtigten Reflexionen minimiert.

Im Strahlengang des in Fig. 3 gezeigten Reflexionsfiltersystems 4 sind Strahlformungsmittel 28 und 29 vorgesehen. Bei den Strahlformungsmitteln 28 und 29 handelt es sich einerseits um eine Sammellinse und andererseits um eine Zerstreuungslinse. Hierdurch wird die Lage des Bildes der Lichtquelle 3 an die Position gebracht, die das Reflexionsfiltersystem 14 in Verbindung mit der Lichtquelle 3 hat.

In den Reflexionsfiltersystemen 4, 14 aus den Fig. 3 und 4 ist jeweils ein Mittel zur Kühlung 30 vorgesehen. Dieses Mittel zur Kühlung 30 ist hinter dem ersten Reflexionsfilter 22 angeordnet, der das Licht der Lichtquelle zum ersten Mal reflektiert. Das Mittel zur Kühlung 30 ist passiv ausgeführt und dient als Strahlfalle für das Licht, das nicht von diesem Reflexionsfilter 22 reflektiert wird.

Insgesamt sind an den vier Reflexionsfiltern 22 der Reflexionsfiltersysteme 4, 14 aus den Fig. 3 und 4 vier Reflexionen vorgesehen.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Beleuchtungseinrichtung
- 2: DUV-Mikroskop
- 3: Lichtquelle
- 4: Reflexionsfiltersystem
- 5: Strahl des Lichts von (3)
- 6: Detektor
- 7: Strahlleiter
- 8: Mikroskoptisch
- 9: Objekt
- 10: Objektiv
- 11: Eintrittsstrahl
- 12: Austrittsstrahl
- 13: optischer Strahlversatz
- 14: weiteres Reflexionssystem
- 15: Gehäuse von (4), (14)
- 16: Platte
- 17: Drehachse
- 18: Motor
- 19: Gehäuse von (3)
- 20: Gehäuse von weiteren Lichtquellen
- 21: mechanische Schnittstelle
- 22: Reflexionsfilter
- 23: transparenter Baustein
- 24: Grenzfläche
- 25: Reflexionsbeschichtung
- 26: Eintrittsfläche
- 27: Austrittsfläche
- 28: Strahlformungsmittel
- 29: Strahlformungsmittel
- 30: Mittel zur Kühlung

## Patentansprüche

1. Beleuchtungseinrichtung (1), mit einer Lichtquelle (3) und mit einem Reflexionsfiltersystem (4, 14) das in einem Gehäuse angeordnet ist, wobei der Strahl (5) des Lichts der Lichtquelle (3) mehrere Reflexionen in dem Reflexionsfiltersystem (4, 14) durchläuft, **dadurch gekennzeichnet,**
■ **dass** im Gehäuse ein erstes Reflexionsfiltersystem (4) vorhanden ist, das vier Reflexions-Notch-Filter umfasst, die derart ausgestaltet sind, dass sie Licht mit einer Wellenlänge von 365nm reflektieren;
■ **dass** im Gehäuse ein zweites Reflexionsfiltersystem (14) vorhanden ist, das vier Reflexions-Notch-Filter umfasst, die derart ausgestaltet sind dass sie Licht mit einer Wellenlänge von 248nm reflektieren;
■ **dass** beide Reflexionsfiltersystem (4,14) auf einer Platte (16) augebracht sind, wobei die Platte (16) um eine Drehachse (17) drehbar gelagert ist, sodass selektiv das erste Reflexionsfiltersystem (4) oder das zweite Reflexionsfiltersystem (14) in den Strahl (5) des Lichts der Lichtquelle (3) positionierbar ist, und
■ wobei das erste Reflexionsfiltersystem (4) und das zweite Reflexionsfiltersystem (14) derart ausgestaltet ist, dass das Licht der Lichtquelle (3) im jeweiligen Reflexionsfiltersystem (4, 14) mindestens vier Reflexionen erfährt und dass ein Eintrittsstrahl (11) in das entsprechende Reflexionsfiltersystem (4, 14) zu einem entsprechenden Austrittsstrahl (12) parallel ist und einen optischen Strahlversatz (13) aufweist.

2. Beleuchtungseinrichtung (1) nach Anspruch 1, **dadurch gekennzeichnet, dass** die Beleuchtungseinrichtung (1) zur Verwendung in einem Mikroskop ausgestaltet ist.

3. Beleuchtungseinrichtung (1) nach Anspruch 1, **dadurch gekennzeichnet, dass** das Mikroskop ein UV-Mikroskop ist.

4. Beleuchtungseinrichtung nach einem der Ansprüche 1 bis 3, **dadurch gekennzeichnet, dass** der Reflexionswinkel für alle vier Reflexion in dem Reflexionsfiltersystem (4, 14) zumindest nahezu gleich ist

5. Beleuchtungseinrichtung nach Anspruch 1, **dadurch gekennzeichnet, dass** eine mechanische und/oder eine motorische Umschaltung für die rotierbare Platte (16) vorgesehen ist.

6. Beleuchtungseinrichtung nach einem der Ansprüche 1 bis 5, **dadurch gekennzeichnet, dass** die Lichtquelle (3) in einem Gehäuse (19) angeordnet ist.

7. Beleuchtungseinrichtung nach Anspruch 6, **dadurch gekennzeichnet, dass** das Gehäuse (15) für das Reflexionsfiltersystem (4, 14) und das Gehäuse (19, 20) für die Lichtquelle (3) oder weitere Lichtquellen eine mechanische Schnittstelle (21) aufweisen, die vorzugsweise standardisiert ist.

8. Beleuchtungseinrichtung nach einem der Ansprüche 1 bis 7, **dadurch gekennzeichnet, dass** das Licht im Reflexionsfiltersystem (4, 14) und/oder beim Austritt aus dem Reflexionsfiltersystem (4, 14) zumindest weitgehend kollimiert verläuft.

9. Beleuchtungseinrichtung nach einem der Ansprüche 1 bis 8, **dadurch gekennzeichnet, dass** im Strahlengang des Reflexionsfiltersysteme (4, 14) oder in dessen Gehäuse (15) Strahlformungsmittel (28, 29) vorgesehen sind, beispielsweise in Form von Linsen.

10. Beleuchtungseinrichtung nach einem der Ansprüche 1 bis 9, **dadurch gekennzeichnet, dass** im Reflexionsfiltersystem (4, 14) passive und/oder aktive Mittel zur Kühlung (30) vorgesehen sind.

11. Beleuchtungseinrichtung nach Anspruch 1, **dadurch gekennzeichnet, dass** das Reflexiensfiltersystem (4) aus einem transparenten Baustein (23) besteht, bei dem zur Reflexion des Lichts im transparenten Baustein (23) mindestens zwei Grenzflächen (24) des transparenten Bausteins (23) eine Reflexionsbeschichtung (25) aufweisen, wobei die Grenzflächen (24) gegenüberliegend angeordnet sind.

12. Beleuchtungseinrichtung nach Anspruch 11, **dadurch gekennzeichnet, dass** die Form des transparenten Bausteins (23) derart ausgebildet ist, dass die Grenzflächen (24) zumindest nahezu parallel oder geringfügig keilförmig zueinander angeordnet sind.

13. Beleuchtungseinrichtung nach Ansprüch 12 **dadurch** gekennzeichet, dass der transparente Baustein (23) Im Wesentlichen aus Glas, Quarzglas, CaF2, Plexiglas oder dergleichen hergestellt ist.

14. Beleuchtungseinrichtung nach einem der Ansprüche 12 bis 13, **dadurch gekennzeichnet, dass** der transparente Baustein (23) Eintrittsflächen (26) und Austrittsflächen (27) für das Licht der Lichtquelle (3) aufweist, die vorzugsweise mit einer Anit-Reflex-Beschichtung versehen sind.

15. Mikroskop, insbesondere Halbleiterinspektions- oder Halbleitermessmikroskop, **gekennzeichnet durch** eine Beleuchtungseinrichtung (1) nach einem der Ansprüche 1 bis 14.

## Claims

1. Illuminating device (1) with a light source (3) and a reflecting filter system (4, 14) which is positioned in a housing, wherein the beam of light (5) of the light source (3) passes through a number of reflections in the reflecting filter system (4, 14), **characterized by**:
■ a first reflecting filter system (4) is provided in the housing comprising four reflection-notch-filters, which are designed in such a way that they reflect light with a wave length of 365 nm;
■ a second reflecting filter system (14) is provided in the housing comprising four reflection-notch-filters, which are designed in such a way that they reflect light with a wave length of 248 nm;
■ both reflecting filter systems (4, 14) are positioned on a plate (16), wherein said plate (16) is mounted pivotably about a rotating axis (17), so that the first reflecting filter system (4) or the second reflecting filter system (14) can selectively be positioned into the beam of light (5) of the light source (3), and
■ wherein the first reflecting filter system (4) and the second reflecting filter system (14) are designed in such a way that the light of the light source (3) in the respective reflecting filter system (4, 14) is exposed to at least four reflections and that an entering beam (11) into the respective reflecting filter system (4, 14) is parallel to a corresponding exit beam (12) and has an optical beam offset (13).

2. Illuminating device (1) as defined in claim 1, wherein the illuminating device (1) is designed for the usage in a microscope.

3. Illuminating device (1) as defined in claim 1, wherein the microscope is a UV microscope.

4. Illuminating device (1) as defined in one of the claims 1 to 3, wherein in the reflecting filter system (4, 14) the reflection angle for all four reflections is at least almost the same.

5. Illuminating device (1) as defined in claim 1, wherein a mechanic and/or motor-driven switch-over is intended for the rotatable plate (16).

6. Illuminating device (1) as defined in one of the claims 1 to 5, wherein the light source is positioned in a housing (19).

7. Illuminating device as defined in claim 6, wherein the housing (15) for the reflecting filter system (4, 14) and the housing (19, 20) for the light source (3) or further light sources have a mechanic interface (21) which is preferably standardized.

8. Illuminating device (1) as defined in one of the claims 1 to 7, wherein the light in the reflecting filter system (4, 14) and/or when emerging from the reflecting filter system (4, 14) is at least collimated to a large extent.

9. Illuminating device (1) as defined in one of the claims 1 to 8, wherein means for beam forming (28, 29) are intended in the optical path of the reflecting filter system (4, 14) or in its housing (15), in the form of lenses for example.

10. Illuminating device (1) as defined in one of the claims 1 to 9, wherein passive and/or active cooling means (30) are intended in the reflecting filter system (4, 14).

11. Illuminating device (1) as defined in claim 1, wherein the reflecting filter system (4) consists of a transparent component (23), wherein at least two boundary layers (24) of the transparent component (23) are provided with a reflection coating (25) for reflecting the light in the transparent component (23) and wherein the boundary layers (24) are positioned opposed to each other.

12. Illuminating device (1) as defined in claim 12, wherein the shape of the transparent component (23) is designed in such a way that the boundary layers (24) are positioned at least almost parallel or slightly tapered to each other.

13. Illuminating device (1) as defined in one of the claims 12 to 13, wherein the transparent component (23) is basically made of glass, quartz glass, CaF2, plexiglass or the like.

14. Illuminating device (1) as defined in one of the claims 12 to 14, wherein the transparent component (23) is provided with entry channels (26) and exit channels (27) for the light of the light source (3), wherein said entry channels (26) and exit channels (27) preferably have an anti-reflection-coating.

15. Microscope, particularly semiconductor inspection microscope or semiconductor measuring microscope, **characterized by** an illuminating device (1) as defined in one of the claims 1 to 14.

## Revendications

1. Equipement d'éclairage (1) avec une source de lumière (3) et avec un système de filtres de réflexion (4, 14) qui est disposé dans un boîtier, étant donné que le faisceau (5) de la lumière de la source de lumière (3) subit plusieurs réflexions dans le système de filtres de réflexion (4, 14), **caractérisé en ce que**
■ qu'il existe dans le boîtier un premier système de filtres de réflexion (4) qui comprend quatre filtres de Notch de réflexion qui sont conçus de manière à réfléchir la lumière avec une longueur d'onde de 365 nm ;
■ qu'il existe dans le boîtier un deuxième système de filtres de réflexion (14) qui comprend quatre filtres de Notch de réflexion qui sont conçus de manière à réfléchir la lumière avec une longueur d'onde de 248 nm ;
■ les deux systèmes de filtres de réflexion (4, 14) sont installés sur une plaque (16), étant donné que la plaque (16) est pivotante autour d'un axe de rotation (17) de manière à ce que le premier système de filtres de réflexion (4) ou le deuxième système de filtres de réflexion (14) puisse être positionné sélectivement dans le faisceau (5) de la lumière de la source de lumière (3), et
■ étant donné que le premier système de filtres de réflexion (4) et le deuxième système de filtres de réflexion (14) sont conçus de manière à ce que la lumière de la source de lumière (3) subisse au moins quatre réflexions dans le système de filtres de réflexion (4, 14) concerné, et à ce qu'un faisceau d'entrée (11) dans le système de filtres de réflexion (4, 14) concerné est parallèle à un faisceau de sortie (12) correspondant et présente un décalage de faisceau optique (13).

2. Equipement d'éclairage (1) selon la revendication 1, **caractérisé en ce que** l'équipement d'éclairage (1) est conçu pour utilisation dans un microscope.

3. Equipement d'éclairage (1) selon la revendication 1, **caractérisé en ce que** le microscope est un microscope ultraviolet.

4. Equipement d'éclairage selon l'une quelconque des revendications 1 à 3, **caractérisé en ce que** l'angle de réflexion pour toutes les quatre réflexions dans le système de filtres de réflexion (4, 14) est au moins pratiquement identique.

5. Equipement d'éclairage selon la revendication 1, **caractérisé en ce qu'**une commutation mécanique et/ou motorisée pour la plaque rotative (16) est prévue.

6. Equipement d'éclairage selon l'une quelconque des revendications 1 à 5, **caractérisé en ce que** la source de lumière (3) est disposée dans un boîtier (19).

7. Equipement d'éclairage selon la revendication 6, **caractérisé en ce que** le boîtier (15) pour le système de filtres de réflexion (4, 14) et le boîtier (19, 20) pour la source de lumière (3) ou d'autres sources de lumière présentent une jonction mécanique (21) qui est de préférence standardisée.

8. Equipement d'éclairage selon l'une quelconque des revendications 1 à 7, **caractérisé en ce que** la lumière dans le système de filtres de réflexion (4, 14) et/ou à la sortie du système de filtres de réflexion (4, 14) est au moins en grande partie collimatée.

9. Equipement d'éclairage selon l'une quelconque des revendications 1 à 8, **caractérisé en ce que** sont prévus des moyens de modelage de faisceau (28, 29) dans la trajectoire du faisceau du système de filtres de réflexion (4, 14) ou dans le boîtier (15) de ce dernier, par exemple sous forme de lentilles.

10. Equipement d'éclairage selon l'une quelconque des revendications 1 à 9, **caractérisé en ce que** sont prévus dans le système de filtres de réflexion (4, 14) des moyens passifs et/ou actifs pour le refroidissement (30).

11. Equipement d'éclairage selon la revendication 1, **caractérisé en ce que** le système de filtres de réflexion (4) se compose d'un composant transparent (23), dans lequel, pour la réflexion de la lumière dans le composant transparent (23), au moins deux surfaces limites (24) du composant transparent (23) présentent un revêtement réflecteur (25), étant donné que les surfaces limites (24) sont disposées l'une en face de l'autre.

12. Equipement d'éclairage selon la revendication 11, **caractérisé en ce que** la forme du composant transparent (23) est conçue de manière à ce que les surfaces limites (24) soient au moins presque parallèles ou minimalement cunéiformes l'une par rapport à l'autre.

13. Equipement d'éclairage selon la revendication 12, **caractérisé en ce que** le composant transparent (23) est essentiellement fabriqué en verre, verre de quartz, CaF₂, plexiglas ou un matériau similaire.

14. Equipement d'éclairage selon l'une quelconque des revendications 12 à 13, **caractérisé en ce que** le composant transparent (23) présente des surfaces d'entrée (26) et des surfaces de sortie (27) pour la lumière de la source de lumière (3), surfaces qui sont de préférence revêtues d'une couche anti-reflex.

15. Microscope, en particulier microscope d'inspection de semi-conducteur ou microscope de mesure de semi-conducteur, **caractérisé par** un équipement d'éclairage (1) selon l'une quelconque des revendications 1 à 14.
